# EUROPEAN PATENT APPLICATION

(11) **EP 4 718 263 A1**
(43) Date of publication of application: **01.04.2026**
(21) Application number: 24203690.3
(22) Date of filing: 30.09.2024
(51) Int. Cl.: G06F 11/20, H04L 67/1095, G06F 11/16

(54) **METHOD OF PREPARING A SYSTEM, METHOD OF OPERATING A SYSTEM, APPARATUS, AND SYSTEM**

(71) Applicant: Hitachi Energy Ltd, 8050 Zürich (CH)
(72) Inventor: EIDENBENZ, Raphael, 8049 Zürich (CH); GERSPACH, Stephan, 79737 Herrischried (DE); INDLEKOFER, Andreas, 79771 Klettgau (DE)
(74) Representative: Vossius & Partner Patentanwälte Rechtsanwälte mbB

(57) **Abstract**

The present disclosure relates to a method of preparing a system (10), the system (10) including a first device (12) and a second device (14), the second device (14) being configured to act as a backup device to the first device (12), the first device (12) and the second device (14) having a service-oriented architecture, SOA. The method includes: copying a configuration of the first device (12), the configuration including at least one service of the first device (12); applying at least a portion of the copied configuration of the first device (12) to the second device (14); communicatively connecting the first device (12) and the second device (14); sending data from the first device (12) to the second device (14) to at least partially synchronize the second device (14) with the first device (12).

The present disclosure also relates to a method of operating a system (10), an apparatus (30) for synchronizing a first device (12) and a second device (14), and a system (10).

## Description

Systems which include at least one first device and at least one second device which serves as a backup or standby device to the first device are widely used in a variety of different fields and/or for a variety of different purposes. For instance, such systems are often used for controlling a battery storage.

The first device may be operated as a "hot" device and the second device, i.e., the "backup" or "redundant" or "standby" device, may take over operation for the first device, e.g., while the first device is being serviced or updated and/or when the first device is faulty. In other words, the first device and the second device may alternately be the "hot device" or the "backup" or "redundant" or "standby" device.

The first device and the at least one second device must or can be synchronized. An implicit state synchronization and an explicit state synchronization are commonly used in the prior art to synchronize the respective devices. In an implicit state synchronization, all external inputs to the device respective are usually duplicated and outputs are usually selected/merged/filtered and transferred to the receiving outer or external devices. In an explicit state synchronization, information, e.g., information on the state of the device, is continuously updated or sent from the hot device to the standby device via an explicit state synchronization mechanism.

However, there are several disadvantages in the systems, methods, or mechanisms known from the prior art. For instance, in implicit synchronization schemes, an additional effort on the environment is usually required for duplication and aggregation, which often may require additional physical and digital products and configurations for this specific purpose. In explicit synchronization schemes, an explicit state synchronization mechanism is usually required which may entail additional effort for each service, in particular for a device having a service-oriented architecture, SOA, and/or each function and/or each component of the respective device. A service developer usually must clearly mark and separate state-relevant parts from other parts of the service or function implementation, which may significantly restrict the design or configuration of the respective service. A practical consequence may be that services or functions that were not, or at least not initially, designed with redundancy in mind usually must go through a re-engineering/refactoring process before they can be used in a redundancy system.

Thus, there is a need to improve various aspects related to redundancy systems, for example, by addressing one or more of the drawbacks described above.

One or more drawbacks related to redundancy systems, in particular one or more of the drawbacks described above, may be improved by one or more aspects of the present disclosure.

According to a first aspect of the present disclosure, there is provided a method of or for preparing a system. The system may include a first device and a second device. The second device may be configured to act as a backup device (also referred to as "redundant device") to the first device. The first device and the second device may each have a service-oriented architecture, SOA. The method may include at least partially or completely transferring a configuration, e.g., configuration data, of the first device to the second device. The at least partially or completely transferring a configuration, e.g., configuration data, of the first device to the second device may include: copying a configuration, e.g., configuration data, of the first device. The configuration may include at least one or more services of the first device. The at least partially or completely transferring a configuration, e.g., configuration data, of the first device to the second device may include: applying or transferring at least a portion of the copied configuration, e.g., the copied configuration data, of the first device to the second device. The method may include communicatively connecting the first device and the second device. The method may include sending data from the first device to the second device to at least partially synchronize the second device with the first device.

As mentioned at the beginning, an implicit state synchronization and an explicit state synchronization are commonly used in the prior art to synchronize the respective devices in a redundancy system. However, as also discussed at the beginning, there are several disadvantages in the systems and methods known from the prior art. The present disclosure strikes a balance between an implicit and explicit state synchronization, in particular by achieving easier setup and higher flexibility than implicit synchronization, as well as transparency in the sense that there are no explicit state synchronization implementations required by the service developers.

The present disclosure addresses one or more disadvantages of the synchronization schemes known from the prior art, inter alia, by at least partially or completely copying the configuration of the first device and applying or transferring at least a portion of the copied configuration of the first device to the second device. This may allow some or all services of the second device to be configured in the same way as on the first device. Thus, no additional configuration engineering may be required for the second device, or at least an effort of the configuration engineering may be reduced. In other words, a generation of configuration(s) for the second device, i.e., the standby device, may be based on the non-redundant, i.e., hot, device, i.e., the first device.

This may allow communication, in particular state-relevant communication, in particular state-relevant communication between services, of the first device to be duplicated and may allow the communication to be sent to the duplicated service instances on the second device, corresponding to the recipients on the first device. The method may allow one or more services on the second device, i.e., the standby device, to be synchronized with one or more services on the first device, i.e., the hot device.

Moreover, the method disclosed herein may not require a duplication of device inputs and outputs, i.e., service states of the first device and the second device can be synchronized without duplicating inputs, e.g., inputs from one or more external devices. This may save system engineering and deployment effort. Moreover, this may facilitate enhancing a system where the environment around the first device and second device does not already support multiple devices, i.e., in a system which is or was not configured as a redundancy system.

Furthermore, service developers do not need to provide one or more custom mechanisms for state synchronization. Hence, service states can be synchronized without a service specific state synchronization mechanism. Each new service can automatically use the mechanism already in place. Thus, no new mechanism is needed for synchronization.

In particular, the method may allow an automated or semi-automated duplication or at least partial duplication of the configuration of the first device to the second device.

The first device may also be configured to act as a backup device to the second device, in particular when operation has been switched from the first device to the second device, i.e., such that the second device becomes the "hot device".

The system may include more than two devices, e.g., at least two devices may be included as "backup" or "standby" or "redundant" devices (e.g., the second device and at least one further device) for or to at least one "hot device" (e.g., the first device).

The method may be employed for a variety of different purposes and/or in a variety of different fields. In a non-limiting example, the method may be employed in or for a redundant controller, e.g., a power plant controller and/or a controller for a battery energy storage system.

The method may be performed by one or more components of the system, e.g., a processor and/or one or more engineering tools, and/or one or more device not included in the system, e.g., a processor and/or one or more engineering tools.

The "configuration" of the first device and/or the second device, as used herein, may include a list of services, e.g., to be instantiated, a configuration of and/or for each service, one or more settings, in particular one or more some device-wide settings, one or more IP addresses, and/or one or more ports, one or more IDs, etc.

The configuration(s) may come and/or be provided as streamed JSON files or XML files, or serialized objects in Protobuf format. The system may include and/or allow one or more proprietary formats, such as binary streams, and may transfer it to the appropriate and/or respective service for consumption, i.e., for adapting its behavior according to the given configuration artifact.

The service configuration(s) may be specific to one or more standards, e.g., if the service provides an IEC 61850 communication stack, part of the configuration artifacts may be or include configuration files from that standard, written in SCL language. Other supported protocols may be MODBUS and IEC 60870-5-104.

The configuration may include data related to a behavior in case of one or more faults. For instance, a threshold of how long a device delays or may delay sending a heartbeat to another device may be included in the configuration.

Preferably, the method further includes, after copying a configuration of the first device, and preferably before applying at least a portion of the copied configuration of the first device to the second device:
at least partially adapting and/or adjusting the copied configuration of the first device. This may allow one or more details or aspects of the configuration to be adapted for the second device.

The configuration of the first device may be generated using at least one engineering tool. Generating the configuration of the first device may include generating one or more, preferably a set of, artifacts, e.g., files (e.g., one or more XML files, JSON, and/or one or more proprietary file formats).

"Copying a configuration of the first device" may comprise duplicating the generated artifacts, and optionally adjusting one or more values in one or more of the copied artifacts, in particular to generate an adjusted or corrected configuration for the second device, i.e., the standby device. For instance, a list of services and one or more service configurations may be copied. One or more new values may be generated for the copied artifacts, in particular at least for some IDs that shall or must be unique. Optionally, at least one additional, e.g., new, service, in particular a fault tolerance service, may be generated and applied to the first device and/or the second device, in particular to the artifact(s) of the first device and the artifact(s) of the second device, in particular with appropriate and/or suitable parameters.

"Applying or transferring at least a portion of the copied configuration" may include connecting at least one engineering tool (e.g., the engineering tool mentioned above) to the second device and/or uploading the artifacts (or a derived digital representation thereof) to the second device (e.g., after authentication). The second device may receive the new configuration data, e.g., the artifacts, and may store the configuration data in a database, in particular a persistent database, or a file system, and then may distribute the new configuration data, e.g., the artifacts, to the services of the second device, wherein the services of the second device may then apply the new configuration data. Applying the configuration may cause an instantiation or spawning of one or more additional services, which may then receive a configuration. One designated service may be responsible for spawning and/or destroying other services according to a list of services provided by the configuration.

Preferably, the method further includes, after applying the copied configuration to the second device, replacing one or more first universally unique identifiers, UUID, of the second device with one or more second UUIDs. The first universally unique identifiers may correspond to UUIDs of the first device and the second universally unique identifiers may provide the second device with its own individual UUIDs.

Preferably, the method further includes:
monitoring a state and/or a health of the first device and/or the second device. Preferably, the state and/or the health indicate and/or are processed to determine a readiness of the first device and/or the second device for operation, e.g., to be a "hot device".

Preferably, the state and/or the health of the first device and/or the second device is/are monitored by determining at least one health score of the first device and/or the second device. Preferably, the health score is based on an availability and/or operability of one or more services of the first device and/or one or more services of the second device, respectively. This may ensure that there is always one device (of the first device and the second device or at least one further device) suitable to be operated as a "hot device" while the other device takes the role of a standby device.

Preferably, the state and/or the health of the first device and/or the second device is/are monitored by a fault tolerance service of the first device and/or the second device, respectively. Preferably, the fault tolerance service is added to one or more services in the configuration of the first device and/or the configuration of the second device, preferably before copying the configuration of the first device.

Preferably, the system includes one or more, preferably a plurality of endpoint directories or endpoint directory instances, to be equipped or better equipped for, i.e., to survive, one or more faults, e.g., device faults.

Preferably, the first device comprises one or more first endpoint directory instances and the second device comprises one or more second endpoint directory instances. Communicatively connecting the first device and the second device may comprise connecting at least one of the first endpoint directory instances and at least one of the second endpoint directory instances, preferably all of the first endpoint directory instances and all of the second endpoint directory instances.

Preferably, the first endpoint directory instances and the second endpoint directory instances continuously synchronize information with each other about one or more services of the first device and/or the second device and/or at least one functionality of the first device and/or the second device.

Preferably, upon and/or after registration and/or de-registration of at least one service of the first device and/or the second device, at least one endpoint directory instance of the first device and/or the second device forwards information of the respective service, preferably including a service name, an instance id, and/or an address, to at least one endpoint directory instance of the other of the first device and the second device.

Preferably, the first endpoint directory instances and/or the second endpoint directory instances are configured to determine whether information received by the respective first endpoint directory instances and/or the second endpoint directory instances was provided and/or sent from a local endpoint directory instance or a remote endpoint directory instance. As a result, each endpoint directory or endpoint directory instance may know, and can distinguish between, local and remote services. The services of the first device and/or the second device may only register with one endpoint directory or endpoint directory instance. The respective endpoint directory or endpoint directory instance may only forward information directly registered or deregistered with them

Preferably, the at least one endpoint directory instance of the other of the first device and the second device stores the information and remembers that the information originates from a remote endpoint directory or a local endpoint directory.

Preferably, the method further includes applying, preferably publishing, information regarding at least one port, in particular at least one IP:port, of the first device and/or the second device.

Preferably, copying configuration of the first device includes retrieving all subscribers, from the first device, preferably from one or more endpoint directories of the first device. The "all subscribers" may be or may include local and/or remote subscribers. The term "subscriber" may refer to a service of the first device which subscribes, e.g., to one or more topics.

Preferably, applying the copied configuration of the first device to the second device includes sending the retrieved subscribers to the second device, preferably via at least one data transportation mechanism.

Preferably, the first device and the second device are controllers, preferably power plant controllers, preferably controllers for controlling at least one battery energy storage system.

The first device and the second device may be intelligent electronic devices, IED.

According to a second aspect, the present disclosure also relates to a method of operating a system. The system may include a first device and a second device. The first device and the second device may each have a service-oriented architecture, SOA. The first device or the second device may be configured to act as a backup device to the other of the first device and the second device.

The method may include:
determining whether the first device or the second device is the backup device.

The method may include:
publishing information by the first device or the second device which has not been determined to be the backup device.

The method may include:
preventing the first device or the second device, which has been determined to be the backup device, from publishing information.

This may allow an automated prevention of communication based on a mode of the first device and/or the second device, i.e., whether the first device or the second device is the backup device. Preventing the first device or the second device, which has been determined to be the backup device, from publishing information may prevent communication or information being doubled, i.e., such that a service does not receive a command from a remote service or remote service instance and a local service or local service instance.

The term "publishing information" may mean or include sending information or data to one or more subscribers, in particular of the first device and/or second device, e.g., one or more services which subscribe, i.e., request to receive information/data, in particular for one or more topics.

Preferably, the method further includes:
marking information as local information such that data on the local information is transferred and/or allowed to be transferred only within the first device or the second device, respectively;
   and/or
marking information as shared information such that data on the shared information is transferred and/or allowed to be transferred from the first device to the second device and/or from the second device to the first device.

The term "topic(s)", as used herein, refers to a known concept for classifying/grouping data. One exemplary protocol that uses hierarchical topics is, e.g., MQTT. In publish-subscribe messaging systems, a publisher publishes to a topic. 0 or more subscribers may subscribe to the topic. A messaging system may ensure that the subscribers receive the data issued by any publisher to a subscribed topic.

For instance, a topic may be related to a certain power generator, e.g., the topic may be or include one or more alarms, global data, a fault tolerance, etc.

"Marking information" may mean that the information, i.e., data, is associated with one or more topics. The one or more topics may be set to be shared, in particular local or remote-only, in particular via a-priori configuration. The first device and the second device may receive the same configuration about which topic(s) is/are shared, local or remote-only. State-relevant topics may be configured or marked as "shared".

Preferably, the first device or the second device, which has been determined to be the backup device, is prevented from publishing information, in particular including to one or more services or service instances within or of the same device, i.e., the first device or the second device, respectively, only if the information is marked as shared information.

According to a third aspect, the present disclosure also relates an apparatus for synchronizing a first device and a second device. The second device may be configured to act as a backup device to the first device. The first device and the second device may each have a service-oriented architecture, SOA. The apparatus may be configured to copy a configuration of the first device, the configuration including at least one or more services of the first device. The apparatus may be configured to apply the copied configuration of the first device to the second device. The apparatus may be configured to communicatively connect the first device and the second device. The apparatus may be configured to transfer data from the first device to the second device to synchronize the first device and the second device.

The features, embodiments, and advantages, as described above with respect to the method according to the first aspect of the present disclosure, apply to the apparatus accordingly.

According to a fourth aspect, the present disclosure also relates a system which includes a first device and a second device. The first device and the second device may each have a service-oriented architecture, SOA. The first device or the second device may be configured to act as a backup device to the other of the first device and the second device. The system may be configured to determine whether the first device or the second device is the backup device. The system may be configured to publish information by the first device or the second device which has not been determined to be the backup device. The system may be configured to prevent the first device or the second device, which has been determined to be the backup device, from publishing information.

The features, embodiments, and advantages, as described above with respect to the method according to the second aspect of the present disclosure, apply to the system accordingly.

The methods described herein are not limited to a particular sequence. The steps of the methods described herein may be performed in any sequence which is technically feasible. The embodiments described herein are not meant to limit the scope of the invention.

The following list of aspects provides alternative and/or further features of the invention:
1. A method of preparing a system, the system including a first device and a second device, the second device being configured to act as a backup device to the first device, optionally wherein the first device and the second device each having a service-oriented architecture, SOA, wherein the method includes:
   copying at least a portion of a configuration, in particular configuration data, of the first device, optionally wherein the configuration, in particular configuration data, includes at least one or more services of the first device;
   applying at least a portion of the copied configuration of the first device to the second device;
   optionally communicatively connecting the first device and the second device;
   sending data from the first device to the second device to at least partially synchronize the second device with the first device.
2. The method of aspect 1, further including, after applying the copied configuration to the second device, replacing one or more first universally unique identifiers, UUID, of the second device with one or more second UUIDs.
3. The method of aspect 1 or 2, further including:
   monitoring a state and/or a health of the first device and/or the second device, preferably wherein the state and/or the health indicate and/or are processed to determine a readiness of the first device and/or the second device for operation.
4. The method of any of the preceding aspects, wherein the state and/or the health of the first device and/or the second device is/are monitored by determining at least one health score of the first device and/or the second device, preferably wherein the health score is based on an availability and/or operability of one or more services of the first device and/or one or more services of the second device, respectively.
5. The method of aspect 3 or 4, wherein the state and/or the health of the first device and/or the second device is/are monitored by a fault tolerance service of the first device and/or the second device, respectively, preferably wherein the fault tolerance service is added to one or more services in the configuration of the first device and/or the configuration of the second device, preferably before copying the configuration of the first device.
6. The method of any of the preceding aspects, wherein the first device comprises one or more first endpoint directory instances and the second device comprises one or more second endpoint directory instances, wherein communicatively connecting the first device and the second device comprises connecting at least one of the first endpoint directory instances and at least one of the second endpoint directory instances, preferably all of the first endpoint directory instances and all of the second endpoint directory instances.
7. The method of aspect 6, wherein the first endpoint directory instances and the second endpoint directory instances continuously synchronize information with each other about one or more services of the first device and/or the second device and/or at least one functionality of the first device and/or the second device.
8. The method of aspect 6 or 7, wherein, upon and/or after registration and/or de-registration of at least one service of the first device and/or the second device, at least one endpoint directory instance of the first device and/or the second device forwards information of the respective service, preferably including a service name, an instance id, and/or an address, to at least one endpoint directory instance of the other of the first device and the second device.
9. The method of any of aspects 6 to 8, wherein the first endpoint directory instances and/or the second endpoint directory instances are configured to determine whether information received by the respective first endpoint directory instances and/or the second endpoint directory instances was provided and/or sent from a local endpoint directory instance or a remote endpoint directory instance.
10. The method of aspect 9, wherein the at least one endpoint directory instance of the other of the first device and the second device stores the information and remembers that the information originates from a remote endpoint directory or a local endpoint directory.
11. The method of any of the preceding aspects, further including applying, preferably publishing, information regarding at least one port of the first device and/or the second device.
12. The method of any of the preceding aspects, wherein copying configuration of the first device includes retrieving all subscribers, from the first device, preferably from one or more endpoint directories of the first device.
13. The method of aspect 12, wherein applying the copied configuration of the first device to the second device includes sending the retrieved subscribers to the second device, preferably via at least one data transportation mechanism.
14. The method of any of the preceding aspects, wherein the first device and the second device are power plant controllers, preferably power plant controllers for controlling at least one battery energy storage system.
15. A method of operating a system, the system including a first device and a second device, optionally wherein the first device and the second device each have a service-oriented architecture, SOA, the first device or the second device being configured to act as a backup device to the other of the first device and the second device, wherein the method includes:
   determining whether the first device or the second device is the backup device;
   optionally, publishing information by the first device or the second device which has not been determined to be the backup device;
   preventing the first device or the second device, which has been determined to be the backup device, from publishing information.
16. The method of aspect 15, further including:
   marking information as local information such that data on the local information is transferred and/or allowed to be transferred only within the first device or the second device, respectively;
      and/or
   marking information as shared information such that data on the shared information is transferred and/or allowed to be transferred from the first device to the second device and/or from the second device to the first device.
17. The method of aspect 16, wherein the first device or the second device, which has been determined to be the backup device, is prevented from publishing information only if the information is marked as shared information.
18. An apparatus for synchronizing a first device and a second device, the second device being configured to act as a backup device to the first device, optionally wherein the first device and the second device each have a service-oriented architecture, SOA, wherein the apparatus is configured to:
   copy a configuration of the first device, the configuration including at least one or more services of the first device;
   apply at least a portion of the copied configuration of the first device to the second device;
   communicatively connect the first device and the second device;
   transfer data from the first device to the second device to synchronize the first device and the second device.
19. A system which includes a first device and a second device, optionally wherein the first device and the second device each have a service-oriented architecture, SOA, the first device or the second device being configured to act as a backup device to the other of the first device and the second device, wherein the system is configured to:
   determine whether the first device or the second device is the backup device;
   optionally, publish information by the first device or the second device which has not been determined to be the backup device;
   prevent the first device or the second device, which has been determined to be the backup device, from publishing information.

Embodiments of the present invention are further elucidated below with reference to the figures. The figures are schematic drawings and as such may not show all details of the systems and their components. Particularly, the drawings are not necessarily to scale and the shown dimensions are only exemplary and may vary. The drawings illustrate exemplary embodiments to provide a thorough understanding of the present invention. The drawings are not intended to limit the scope of the invention, which is defined by the appended claims and is to include the equivalents thereof.
- Fig. 1: schematically illustrates a system according to an embodiment of the present disclosure;
- Fig 2: schematically illustrates an implementation of an endpoint directory synchronization with 2 devices, e.g., of the system of Fig. 1;
- Fig. 3: schematically illustrates a configuration process for a redundant setup with two devices, e.g., of the system of Fig. 1;
- Fig. 4: schematically illustrates how a redundant device configuration is handled by a device, e.g., of the system of Fig. 1.

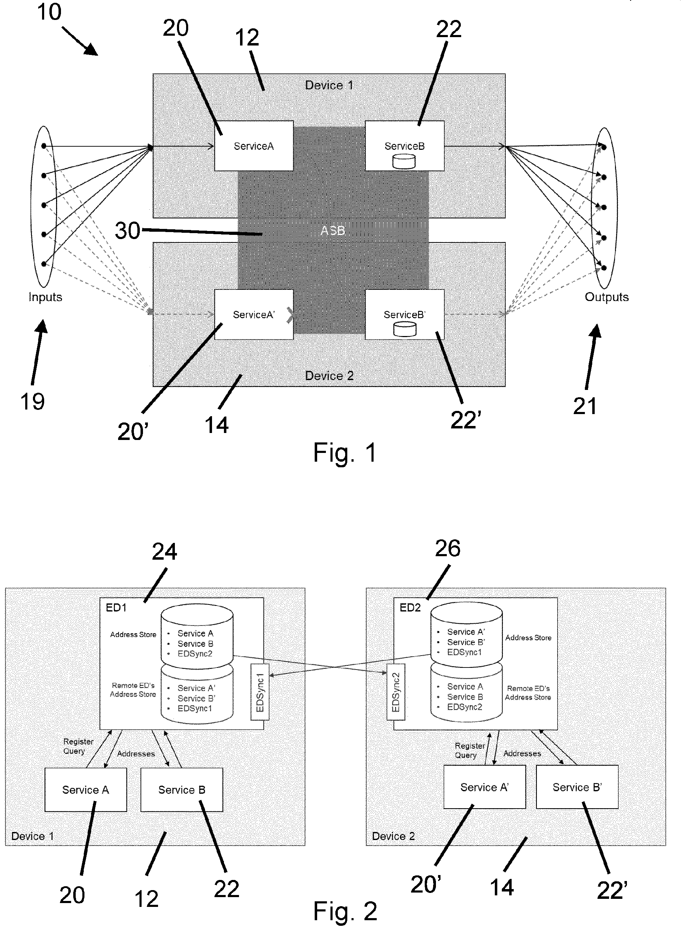

Fig. 1 shows, in a schematic view, a system 10 which includes a first device 12 (referred to as "Device 1") and at least one second device 14 (referred to as "Device 2"). The first device 12 and the second device 14 may each have a service-oriented architecture, SOA. The first device 12 or the second device 14 may be configured to act as a backup device to the other of the first device 12 and the second device 14.

The first device 12, in particular a configuration of the first device 12, may include one or more services 20, 22 (referred to as "ServiceA" and "ServiceB" in Fig. 1). The second device 14, in particular a configuration of the second device 14, may include one or more services 20', 22' (referred to as "ServiceA'" and "ServiceB'" in Fig. 1.

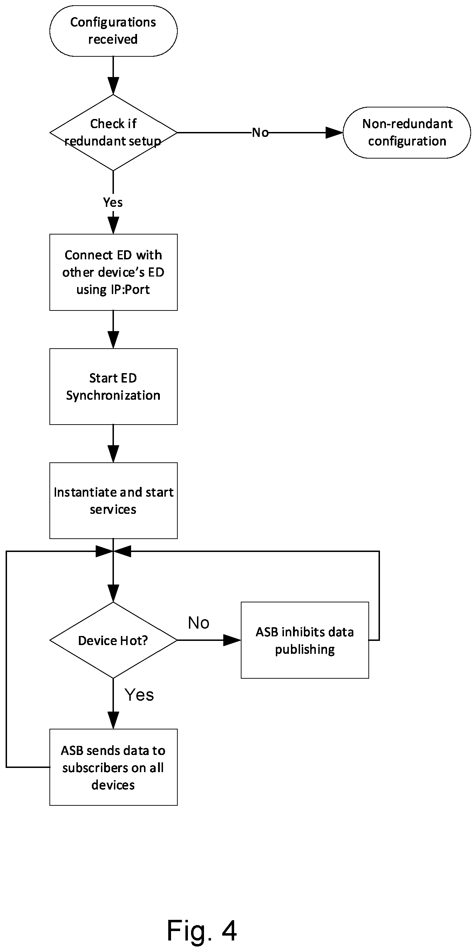

The system 10 may be configured to determine whether the first device 12 or the second device 14 is the backup device. The system 10 may be configured to publish information by the first device 12 or the second device 14 which has not been determined to be the backup device. The system 10 may be configured to prevent the first device 12 or the second device 14, which has been determined to be the backup device, from publishing information. This is also explained further below in connection with Fig. 4.

The system 10, in particular the first device 12, may be configured to receive one or more inputs 19, e.g., one or more data inputs, e.g., from one or more external devices, and to output one or more outputs 21, e.g., one or more data outputs, e.g., to one or more external devices.

Fig. 1 also shows an apparatus 30 for synchronizing the first device 12 and the second device 14. The apparatus 30 may be configured to copy a configuration of the first device 12. The configuration may include at least one or more services, e.g., a list of one or more services, of the first device 12. The apparatus 30 may be configured to apply at least a portion of the copied configuration of the first device 12 to the second device 14. The apparatus 30 may be configured to communicatively connect the first device 12 and the second device 14. The apparatus 30 may be configured to transfer data from the first device 12 to the second device 14 to synchronize the first device 12 and the second device 14.

The apparatus 30 may be configured to perform a method of preparing the system 10. For the sake of explanation, as an example, the second device 14 is considered to be configured to act as a backup or standby device to the first device 12 (alternatively, the first device 12 may be considered to act as a backup or standby device to the second device 14). The method may include: copying a configuration of the first device 12, the configuration including at least one or more services of the first device 12. The method may include: applying at least a portion of the copied configuration of the first device 12 to the second device 14. The method may include: communicatively connecting the first device 12 and the second device 14. The method may include: sending data from the first device 12 to the second device 14 to at least partially synchronize the second device 14 with the first device 12.

Fig. 2 schematically illustrates an implementation of an endpoint directory synchronization with two devices, e.g., the first device 12 and the second device 14 of the system 10 of Fig. 1.

The system 10 may include one or more, preferably a plurality of, endpoint directories or endpoint directory instances 24, 26 (referred to as "ED1" and ED2" in Fig. 2), in particular to be equipped or better equipped for, i.e., to survive, one or more faults, e.g., device faults.

Preferably, each device, e.g., the first device 12 and the second device 14, includes one or more endpoint directories or endpoint directory instances 24, 26. The endpoint directories or endpoint directory instances 24, 26 may continuously synchronize information with each other, e.g., about one or more registered services and the functionality offered by the respective device 12, 14. For instance, upon any new registration (or de-registration) by a service, the respective endpoint directory or endpoint directory instance 24, 26 may forward the new information, e.g., service name, instance id, address, to the other endpoint directories or endpoint directory instances 24, 26, e.g., of the other of the first device 12 and the second device 14.

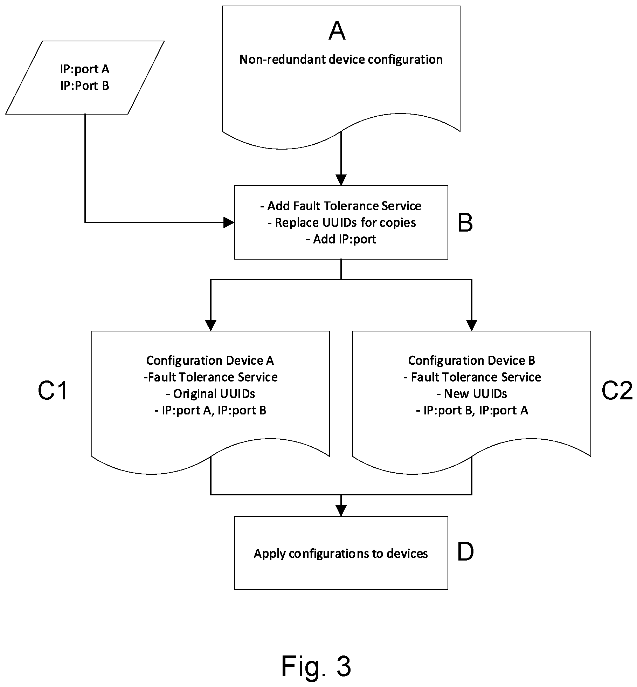

The following is an exemplary process of automatically generating a configuration for a redundant device, e.g., the second device 14:
1. Adding a fault tolerance service to the existing services in each device configuration. The fault tolerance service is responsible for monitoring the device's health and coordinating with fault tolerance services on other devices to ensure that there is always one hot device, while the other devices take the role of standby.
2. Copying the configuration, replacing UUIDs with new UUlDs
3. Adding information on IP:port for ED synchronization
4. The devices are then configured each with its respective configuration.
5. EDs connect to each other and start synchronizing
6. Thereafter, the communication device may ensure that
   o published data is sent to services that subscribed to the respective topic, on any devices
   o data publishing is inhibited if the publishing service is on a standby device. Fig. 3 illustrates, schematically, a configuration process for a redundant setup, e.g., the system 10 of Fig. 1, with at least two devices, e.g., the first device 12 and the second device 14.

In block A, a non-redundant device configuration, i.e., a configuration of a non-redundant or "hot" device may be provided, e.g., at least partially copied or duplicated, e.g., configuration data of the first device 12 may be copied or duplicated. The non-redundant device configuration may be provided by or may be an output of an engineering tool.

In Block B, one or more fault tolerance services may be added to the configuration or configuration data which has been at least partially copied or duplicated from the first device 12. The one or more fault tolerance services may monitor a state and/or a health of the first device 12 and/or the second device 14. As further shown in Block B, one or more universally unique identifiers, UUIDs, in the copied or duplicated configuration may be replaced with one or more second or "new" UUIDs. As further shown in Block B, one or more ports, in particular one or more IP:ports, may be added or replaced to the copied or duplicated configuration. The one or more ports may be provided by a system engineer or via a tool or from a template.

As shown in Block C1, the configuration "Configuration Device A" may be provided for the first device A, e.g., the first device 12 of Figs. 1 and 2 (referred to as "Device A" in Block C1), which may have the one or more fault tolerance services, one or more original UUIDs, IP:port A and IP:port B. As shown in Block C2, the configuration "Configuration Device B" may be provided for the second device B, e.g., the second device 14 of Figs. 1 and 2 (referred to as "Device B" in Block C2), which may have the one or more fault tolerance services, one or more new or replacement UUIDs, IP:port B and IP:port A.

As shown in Block D, the respective configurations of Blocks C1 and C2 may be applied to the devices, e.g., to the first device 12 and the second device 14.

Fig. 4 illustrates, schematically, how a redundant device configuration is handled, e.g., in the system of Fig. 1.

One or more configurations may be received by at least one device, e.g., the first device 12 and/or the second 14. It may be checked, e.g., by the respective device 12, 14 and/or the system 10, whether a redundant setup is present, e.g., in the respective configuration.

If a redundant setup is not present, e.g., if the respective configuration received by the respective device 12, 14 is not a redundant configuration or a configuration for a redundant device, it may be determined that the received configuration is a non-redundant configuration.

If a redundant setup is present, e.g., if the respective configuration received by the respective device 12, 14 is a redundant configuration or a configuration for a redundant device, one or more endpoint directories or endpoint directory instances (see, e.g., 24, 26 in Fig. 2) of the first device 12 or the second device 14 may be connected to one or more endpoint directories or endpoint directory instances (see, e.g., 24, 26 in Fig. 2) of the other of the first device 12 and the second device 14.

Thereafter, a synchronization via the one or more endpoint directories or endpoint directory instances (see, e.g., 24, 26 in Fig. 2) may be performed.

Thereafter, one or more services (e.g., the services 20, 22, 20', 22' of Fig. 1) of the first device 12 and/or the second device 14 may be started.

If it is determined that the respective device 12, 14 is operating, i.e., is "hot", data may be sent to the subscribers on all devices. If it is determined that the respective device 12, 14 is not operating, i.e., is not "hot", i.e., is in standby or backup mode, data may be inhibited or prevented from being published.

## Claims

1. A method of preparing a system (10), the system (10) including a first device (12) and a second device (14), the second device (14) being configured to act as a backup device to the first device (12), the first device (12) and the second device (14) each having a service-oriented architecture, SOA, wherein the method includes:
copying a configuration of the first device (12), the configuration including at least one or more services of the first device (12);
applying at least a portion of the copied configuration of the first device (12) to the second device (14);
communicatively connecting the first device (12) and the second device (14);
sending data from the first device (12) to the second device (14) to at least partially synchronize the second device (14) with the first device (12).

2. The method of claim 1, further including:
monitoring a state and/or a health of the first device (12) and/or the second device (14), preferably wherein the state and/or the health indicate and/or are processed to determine a readiness of the first device (12) and/or the second device (14) for operation.

3. The method of any of the preceding claims, wherein the state and/or the health of the first device(12) and/or the second device (14) is/are monitored by determining at least one health score of the first device (12) and/or the second device (14), preferably wherein the health score is based on an availability and/or operability of one or more services of the first device (12) and/or one or more services of the second device (14), respectively.

4. The method of any of the preceding claims, wherein the first device (12) comprises one or more first endpoint directory instances and the second device (14) comprises one or more second endpoint directory instances, wherein communicatively connecting the first device (12) and the second device (14) comprises connecting at least one of the first endpoint directory instances and at least one of the second endpoint directory instances, preferably all of the first endpoint directory instances and all of the second endpoint directory instances.

5. The method of claim 4, wherein, upon and/or after registration and/or de-registration of at least one service of the first device (12) and/or the second device (14), at least one endpoint directory instance of the first device (12) and/or the second device (14) forwards information of the respective service, preferably including a service name, an instance id, and/or an address, to at least one endpoint directory instance of the other of the first device (12) and the second device (14).

6. The method of claim 4 or 5, wherein the first endpoint directory instances and/or the second endpoint directory instances are configured to determine whether information received by the respective first endpoint directory instances and/or the second endpoint directory instances was provided and/or sent from a local endpoint directory instance or a remote endpoint directory instance.

7. The method of claim 6, wherein the at least one endpoint directory instance of the other of the first device (12) and the second device (14) stores the information and remembers that the information originates from a remote endpoint directory or a local endpoint directory.

8. The method of any of the preceding claims, wherein copying configuration of the first device (12) includes retrieving all subscribers, from the first device (12), preferably from one or more endpoint directories of the first device (12).

9. The method of claim 8, wherein applying the copied configuration of the first device (12) to the second device (14) includes sending the retrieved subscribers to the second device (14), preferably via at least one data transportation mechanism.

10. The method of any of the preceding claims, wherein the first device and the second device (14) are controllers, preferably power plant controllers, preferably controllers for controlling at least one battery energy storage system.

11. A method of operating a system (10), the system (10) including a first device (12) and a second device (14), the first device (12) and the second device (14) each having a service-oriented architecture, SOA, the first device (12) or the second device (14) being configured to act as a backup device to the other of the first device (12) and the second device (14), wherein the method includes:
determining whether the first device (12) or the second device (14) is the backup device;
publishing information by the first device (12) or the second device (14) which has not been determined to be the backup device;
preventing the first device (12) or the second device (14), which has been determined to be the backup device, from publishing information.

12. The method of claim 11, further including:
marking information as local information such that data on the local information is transferred and/or allowed to be transferred only within the first device (12) or the second device (14), respectively;
and/or
marking information as shared information such that data on the shared information is transferred and/or allowed to be transferred from the first device (12) to the second device (14) and/or from the second device (14) to the first device (12).

13. The method of claim 12, wherein the first device (12) or the second device (14), which has been determined to be the backup device, is prevented from publishing information only if the information is marked as shared information.

14. An apparatus (30) for synchronizing a first device (12) and a second device (14), the second device (14) being configured to act as a backup device to the first device (12), the first device (12) and the second device (14) each having a service-oriented architecture, SOA, wherein the apparatus is configured to:
copy a configuration of the first device (12), the configuration including at least one or more services of the first device (12);
apply at least a portion of the copied configuration of the first device (12) to the second device (14);
communicatively connect the first device (12) and the second device (14);
transfer data from the first device (12) to the second device (14) to synchronize the first device (12) and the second device (14).

15. A system (10) which includes a first device (12) and a second device (14), the first device (12) and the second device (14) each having a service-oriented architecture, SOA, the first device (12) or the second device (14) being configured to act as a backup device to the other of the first device (12) and the second device (14), wherein the system (10) is configured to:
determine whether the first device (12) or the second device (14) is the backup device;
publish information by the first device (12) or the second device (14) which has not been determined to be the backup device;
prevent the first device (12) or the second device (14), which has been determined to be the backup device, from publishing information.
